# EUROPÄISCHE PATENTSCHRIFT

(11) **EP 1 065 312 B1**
(45) Veröffentlichungstag und Bekanntmachung des Hinweises auf die Patenterteilung: **26.03.2003**
(21) Anmeldenummer: 00111615.1
(22) Anmeldetag: 31.05.2000
(51) Int. Cl.: D21F 7/08

(54) **Papiermaschinenfilz**
Paper machine felt
Feutre pour machine à papier

(30) Priorität: 01.07.1999 DE 19930464
(43) Veröffentlichungstag der Anmeldung: 03.01.2001
(73) Patentinhaber: Thomas Josef Heimbach GmbH & Co., D-52353 Düren (DE)
(72) Erfinder: Hofmann, Hans, 52392 Hürtgenwald (DE)
(74) Vertreter: Paul, Dieter-Alfred, Dipl.-Ing.

(56) Entgegenhaltungen:
- US-A- 4 564 985

## Beschreibung

Die Erfindung betrifft einen Papiermaschinenfilz für den Einsatz insbesondere in der Pressenpartie einer Papiermaschine.

Der klassische Papiermaschinenfilz besteht in der Regel aus einem Träger in Form eines Gewebes, Gewirkes oder Fadengeleges und einem darauf ein- oder zweiseitig aufgenadelten Faservlies. Die papierseitige Vliesschicht kann dabei zweistufig in der Weise ausgebildet sein, daß die dem Träger benachbarte Vliesschicht gröbere Fasern aufweist als die die Papierseite bildende Vliesschicht.

Als Material für die Fäden, aus denen der Träger hergestellt ist, kommen verschiedene Kunststoffe in Frage, vornehmlich Polyamide (vgl. US-A-4 564 985) und Polyester. Im ersteren Fall hat man vor allem auf Polyamid 6-und Polyamid 6,6-Qualitäten zurückgegriffen, und zwar auch für die Fasern des Faservlieses. In der EP-B-0 287 297 ist vorgeschlagen worden, für das Faservlies Fasern aus Polyamid 12 zu verwenden, da diese Fasern wegen ihrer geringen Wasseraufnahme einen größeren Widerstand gegen Kompaktierung haben und zudem abriebfester sind als die Polyamid 6-Typen. Ähnliche Eigenschaften hat Polyamid 11 (vgl. EP-B-0 372 769).

Ein Problem der bekannten Papiermaschinenfilze besteht darin, daß sich die Durchlässigkeit während der Betriebszeit durch Kompaktierung des Filzes und durch Ablagerungen verschlechtert, selbst wenn Polyamid 11- oder Polyamid 12-Typen verwendet werden. Man begegnet dem dadurch, daß man das Faservlies sehr offen auslegt. Dies wiederum hat jedoch den Nachteil, daß der Papiermaschinenfilz in der Anlaufphase zu offen ist, was insbesondere die Neigung zur Rückbefeuchtung der Papierbahn am Pressenausgang fördert. Um dieses Problem zu lösen, ist vorgeschlagen worden, in das Faservlies lösliche Fasern einzumischen, die nach einer bestimmten Betriebszeit mittels einer geeigneten Flüssigkeit herausgelöst werden können, wodurch die ursprüngliche Durchlässigkeit wiederhergestellt werden kann (vgl. EP-A- 0 303 798; DE-A-34 19 708). Solche Fasern sind jedoch ebenso wie die Anwendung des flüssigen Lösungsmittels teuer.

Der Erfindung liegt die Aufgabe zugrunde, Papiermaschinenfilze so zu gestalten, daß sie über ihre Laufzeit eine gleichmäßigere Durchlässigkeit haben, ohne daß es hierfür zusätzlicher Maßnahmen während des Betriebs bedarf.

Diese Aufgabe wird erfindungsgemäß dadurch gelöst, daß in der Vliesschicht bzw. in wenigstens einer der Vliesschichten eine Faserkombination vorliegt, bei der ein Teil der Kunststoffasern aus einem Material A, das eine maximale Wasseraufnahme von mehr als 10 Gew.-% (Sättigungswert, 23°C) hat, und bei der der Hauptteil der Kunststoffasern aus einem Material B besteht, das eine maximale Wasseraufnahme von höchstens 10 Gew.-% (Sättigungswert, 23°C) hat. Grundgedanke der Erfindung ist es somit, in zumindest einer Vliesschicht eine Faserkombination mit Kunststoffasern unterschiedlicher Wasseraufnahme vorzusehen, wobei der Hauptteil der Kunststoffasern von denen mit niedriger Wasseraufnahme gebildet wird. Dabei sollte der Abstand zwischen den beiden Materialien A und B, was die Wasseraufnahmefähigkeit angeht, deutlich sein.

Die Wirkung der Faserkombination besteht darin, daß die Fasern aus dem Material A aufgrund ihrer hohen Wasseraufnahme wesentlich stärker als die aus dem Material B aufquellen. Durch dieses Aufquellen erhält der Papiermaschinenfilz erst in der Papiermaschine die gewünschte Durchlässigkeit. Da das Material A jedoch nicht so widerstandsfähig ist wie die übrigen Kunststoffasern der Vliesschicht und insbesondere das Material B, werden die Fasern aus dem Material A aufgrund innerer Reibung und auch chemischer Einflüsse mit zunehmender Laufzeit nach und nach zersetzt, was dem alterungsbedingten Dichterwerden des Papiermaschinenfilzes aufgrund von Ablagerungen und/oder Kompaktierung entgegenwirkt. Durch entsprechende Einstellung des Anteils der Kunststoffasern aus dem Material A - vorzugsweise sollte der Gewichtsanteil zwischen 3 bis 25 % liegen - und der Größe der Fasern läßt sich das Durchlässigkeitsverhalten in Richtung auf möglichst geringe Änderungen über die Betriebszeit einstellen.

In Ausbildung der Erfindung ist vorgesehen, daß die Faserkombination in einer papierseitennahen Vliesschicht vorliegt. Hierdurch bildet sich nach dem Aufquellen der Kunststoffasern eine Art Sperrschicht, die die Rückbefeuchtung der Papierbahn nach dem Verlassen des Pressenspalts reduziert. Dies beruht darauf, daß das Wasser zwar die Sperrschicht unter der Druckeinwirkung im Pressenspalt passieren kann, jedoch nach Verlassen des Pressenspaltes mangels Druckeinwirkung durch die Sperrschicht gehindert wird, zur Papierseite hin zurückzufließen. Die Faserkombination aus den Materialien A und B kann jedoch auch in einer im Inneren des Papiermaschinenfilzes angeordneten Vliesschicht vorliegen, die insbesondere oberhalb und/oder unterhalb eines Trägers angeordnet ist. Alternativ dazu ist vorgesehen, daß sämtliche Vliesschichten die erfindungsgemäße Faserkombination aufweisen.

Als günstig hat es sich erwiesen, daß die die Faserkombination enthaltende(n) Vliesschicht(en) ein Flächengewicht von 50 bis 150 g/m² hat bzw. haben.

Der Grundgedanke der Erfindung kann bei einem Papiermaschinenfilz mit einem textilen Fadensystem auch dadurch verwirklicht werden, daß in dem Fadensystem Fäden aus einem Material A, das eine maximale Wasseraufnahme von mehr als 10 Gew.-% (Sättigungswert, 23°C) hat, und Fäden aus einem Material B vorgesehen sind, das eine maximale Wasseraufnahme von höchstens 10 Gew.-% (Sättigungswert, 23°C) hat. Der Effekt ist im wesentlichen der gleiche wie bei der vorbeschriebenen Faserkombination. Die Fäden aus dem Polyamidmaterial können Teil eines Gewebes, Gewirkes oder eines Fadengeleges sein, das zweckmäßigerweise zusätzlich in der papierseitigen Vliesschicht angeordnet ist. Es besteht jedoch auch die Möglichkeit, daß das Gewebe, Gewirke oder Fadengelege mit den Fäden aus den Materialien A und B den Träger des Papiermaschinenfilzes bildet.

Als Material A kommen Polyamid 4 und 4.6 in Frage, da sich dieses Material durch hohe Wasseraufnahme auszeichnet (vgl. Ullmanns Encyklopädie der technischen Chemie, 4. Auflage, 1976, Band 11, Seite 296; Römpp-Chemie-Lexikon, 8. Auflage, 1992, Band 5, Seite 3510). Besonders hohe Wasseraufnahmen werden jedoch mit Polyamid 6 und Polyamid 6.6 erzielt, wenn diese Polyamide mit Polyvinylpyrrolidon (abgekürzt: PVP) und/oder Polyetheramid (abgekürzt: PEA) versetzt werden, und zwar vorzugsweise mit einem Anteil von 3 bis 18 Gew.-%. Diese Materialkombination ist - wie schon Polyamid 4 und Polyamid 4.6 - bisher nur für die Anwendung auf dem Bekleidungssektor empfohlen worden (EP-A-0 802 268). Je nach Anteil des PVP kann eine maximale Wasseraufnahme bis nahe an 20 % erzielt werden (Normalklima: 20°C, 65 % relative Luftfeuchtigkeit).

Als Material B eignen sich Polyamidmaterialen wie Polyamid 6, 6.6, 6.10, 6.12, 11 und 12, aber auch Poly-Trimethylenterephthalat oder Polybutylenterephthalat. Insbesondere die letztgenannten Materialien zeichnen sich durch geringe Wasseraufnahme aus, so daß bei ihrer Verwendung ein deutlicher Abstand zu dem Material A hergestellt werden kann, was die Wasseraufnahmefähigkeit angeht.

In der Zeichnung ist die Erfindung anhand von zwei Ausführungsbeispielen näher veranschaulicht. Es zeigen:
- Figur 1: einen Querschnitt durch einen Papiermaschinenfilz und
- Figur 2: einen Querschnitt durch einen weiteren Papiermaschinenfilz.

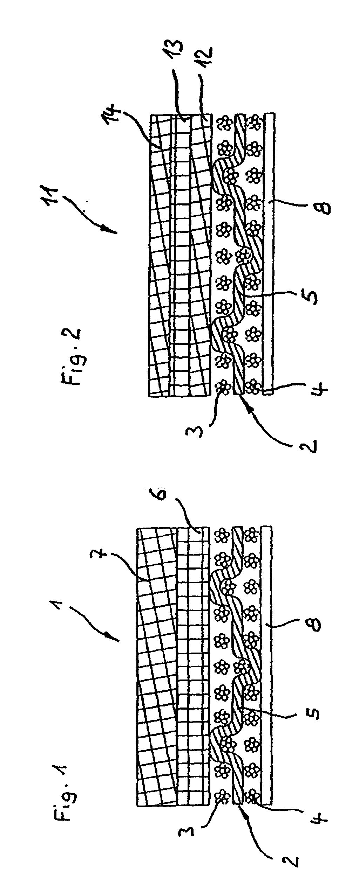

Der in Figur 1 dargestellte Papiermaschinenfilz 1 weist einen Träger 2 auf, der als doppellagiges Gewebe ausgebildet ist. Das Gewebe weist zwei Lagen von Längsfäden - beispielhaft mit 3 und 4 bezeichnet - auf, welche als Multifilamente ausgebildet sind. Querfäden 5 binden die von den Längsfäden 3 und 4 gebildeten Lagen ein. Der Träger 2 nimmt insbesondere die auf den Papiermaschinenfilz 1 wirkenden Längskräfte auf.

Auf den Träger 2 sind eine trägernahe Vliesschicht 6 und eine papierseitennahe Vliesschicht 7 aufgenadelt, wobei die papierseitennahe Vliesschicht 7 die im Betrieb der Papierseite zugewandte Oberfläche des Papiermaschinenfilzes 1 bildet. Die papierseitennahe Vliesschicht 7 ist aus feineren Fasern aufgebaut als die trägernahe Vliesschicht 6. Zusätzlich ist auf der anderen Seite des Trägers 2 eine weitere, maschinenseitennahe Vliesschicht 8 aufgenadelt.

Die papierseitennahe Vliesschicht 7 enthält einen Anteil von Polyamid 6-Fasern, wie sie aus der EP-A-0 802 268 bekannt sind. Diese Fasern enthalten einen Anteil Polyvenylpyrrolidon (PVP), so daß sie gegenüber dem Ausgangsmaterial Polyamid 6 eine entsprechend dem Anteil des PVP wesentlich höhere Wasseraufnahmefähigkeit und damit einen erheblich höheren Quellwert haben. Im Betrieb bewirkt die aus der Papierbahn gepreßte Flüssigkeit ein Aufquellen dieser Fasern unmittelbar nach dem ersten Anlauf, so daß erst dann die gewünschte Durchlässigkeit erzielt wird. Die mit PVP versetzten Polyamid 6-Fasern zersetzen sich jedoch mit zunehmender Laufzeit aufgrund innerer Reibung und chemischer Einflüsse, was der Neigung des Papiermaschinenfilzes zur Verdichtung aufgrund von Kompaktierung und Ablagerungen entgegenwirkt, so daß die Durchlässigkeit des Papiermaschinenfilzes über die Laufzeit weitgehend konstant eingestellt werden kann.

In Figur 2 ist ein Papiermaschinenfilz 11 dargestellt, dessen grundsätzlicher Aufbau mit dem Papiermaschinenfilz 1 gemäß Figur 1 übereinstimmt, so daß nachstehend nur die Abweichungen beschrieben werden, wobei für gleiche Teile gleiche Bezugsziffern verwendet werden.

Auf den Träger 2 ist eine trägernahe Vliesschicht 12 aufgenadelt, deren Dicke jedoch geringer ist als die Vliesschicht 6 bei dem Papiermaschinenfilz 1. Darauf ist ein hier nur schematisch dargestelltes Gewebe 13 aufgelegt, auf das dann wieder eine papierseitennahe Vliesschicht 14 aufgenadelt ist. Das Gewebe 13 dient nicht der Kraftaufnahme, sondern enthält Multifilamente, die aus Polyamid 6 mit einem Anteil Polyvinylpyrrolidon bestehen. Hierdurch wird im wesentlichen die gleiche Wirkung erzielt wie mit den Fasern in der papierseitennahen Vliesschicht 7 bei dem Papiermaschinenfilz 1 gemäß Figur 1, d. h. beim Anlaufen quellen die Multifilamente mit dem Polyvinylpyrrolidon-Anteil auf, wodurch erst die gewünschte Durchlässigkeit entsteht. Durch Zersetzung dieser Multifilamente wird der Neigung zur Verdichtung aufgrund von Kompaktierung und Ablagerung entgegengewirkt.

Die übrigen Fasern der Vliesschichten 6, 7, 8, 12, 14 bestehen aus Polyamid 6, 11 oder 12. Stattdessen oder in Kombination sind auch anderen Kunststoffmaterialien einsetzbar.

## Patentansprüche

1. Papiermaschinenfilz (1, 11) mit wenigstens einer Vliesschicht (7) aus Kunststoffasern, **dadurch gekennzeichnet, daß** in der Vliesschicht bzw. in wenigstens einer der Vliesschichten (7) eine Faserkombination vorliegt, bei der ein Teil der Kunststoffasern aus einem Material A, das eine maximale Wasseraufnahme von mehr als 10 Gew.-% (Sättigungswert, 23°C) hat, und bei der der Hauptteil der Kunststoffasern aus einem Material B besteht, das eine maximale Wasseraufnahme von höchstens 10 Gew.-% (Sättigungswert, 23°C) hat.

2. Papiermaschinenfilz nach Anspruch 1, **dadurch gekennzeichnet, daß** das Material A in der betreffenden Vliesschicht (7) mit einem Gewichtsanteil von 3 bis 25 Gew.-% vorliegt.

3. Papiermaschinenfilz nach Anspruch 1 oder 2, **dadurch gekennzeichnet, daß** die Faserkombination in einer papierseitennahen Vliesschicht (7) vorliegt.

4. Papiermaschinenfilz nach einem der Ansprüche 1 bis 3, **dadurch gekennzeichnet, daß** die Faserkombination in einer im Inneren des Papiermaschinenfilzes angeordneten Vliesschicht vorliegt.

5. Papiermaschinenfilz nach einem der Ansprüche 1 bis 4, **dadurch gekennzeichnet, daß** alle Vliesschichten oberhalb und/oder unterhalb eines Trägers die Faserkombination enthalten oder daraus bestehen.

6. Papiermaschinenfilz nach einem der Ansprüche 1 bis 5, **dadurch gekennzeichnet, daß** die die Faserkombination enthaltende(n) Vliesschicht(en) (7) ein Flächengewicht von 50 bis 150 g/m² hat bzw. haben.

7. Papiermaschinenfilz (11) mit einem textilen Fadensystem(13), **dadurch gekennzeichnet, daß** in dem Fadensystem (13) Fäden aus einem Material A, das eine maximale Wasseraufnahme von mehr als 10 Gew.-% (Sättigungswert, 23°C) hat, und Fäden aus einem Material B vorgesehen sind, das eine maximale Wasseraufnahme von höchstens 10 Gew.-% (Sättigungswert, 23°C) hat.

8. Papiermaschinenfilz nach Anspruch 7, **dadurch gekennzeichnet, daß** das Fadensystem Teil eines Gewebes (13), Gewirkes oder Fadengeleges ist oder daraus besteht.

9. Papiermaschinenfilz nach Anspruch 8, **dadurch gekennzeichnet, daß** das Gewebe (13), Gewirke oder Fadengelege in der papierseitigen Vliesschicht (12, 14) angeordnet ist.

10. Papiermaschinenfilz nach Anspruch 7, oder 8, **dadurch gekennzeichnet, daß** das Gewebe (13), Gewirke oder Fadengelege den Träger des Papiermaschinenfilzes (11) bildet.

11. Papiermaschinenfilz nach einem der Ansprüche 1 oder 10, **dadurch gekennzeichnet, daß** das Material A Polyamid 4 und/oder Polyamid 4.6, und/oder ein Polyamid ist, das Polyvinylpyrrolidon und/oder Polyetheramid enthält.

12. Papiermaschinenfilz nach Anspruch 11, **dadurch gekennzeichnet, daß** das Polyamid, das Polyvinylpyrrolidon und/oder Polyetheramid enthält, ein Polyamid 6 oder Polyamid 6.6 ist.

13. Papiermaschinenfilz nach Anspruch 11 oder 12, **dadurch gekennzeichnet, daß** das Polyvinylpyrrolidon in einem Anteil von 3 bis 18 Gew.-% enthalten ist.

14. Papiermaschinenfilz nach einem der Ansprüche 1 bis 13, **dadurch gekennzeichnet, daß** das Material B ein Polyamidmaterial, wie Polyamid 6, Polyamid 6.6, Polyamid 6.10, Polyamid 6.12, Polyamid 11, Polyamid 12, oder PolyPoly-Trimethylenterephthalat oder Polybutylenterephthalat ist.

## Claims

1. A paper machine felt (1, 11) having at least one nonwoven layer (7) made of plastic fibers, wherein there is present in the nonwoven layer or in at least one of the nonwoven layers (7) a fiber combination in which a portion of the plastic fibers is made of a material A that has a maximum water uptake of more than 10 wt% (saturation value, 23°C) and in which the majority of the plastic fibers is made of a material B that has a maximum water uptake of no more than 10 wt% (saturation value, 23°C).

2. The paper machine felt as defined in Claim 1, wherein material A is present in the relevant nonwoven layer (7) at a weight proportion of 3 to 25 wt%.

3. The paper machine felt as defined in Claim 1 or 2, wherein the fiber combination is present in a paper-side nonwoven layer (7).

4. The paper machine felt as defined in one of Claims 1 through 3, wherein the fiber combination is present in a nonwoven layer arranged in the interior of the paper machine felt.

5. The paper machine felt as defined in one of Claims 1 through 4, wherein all the nonwoven layers above and/or below a support contain or are made of the fiber combination.

6. The paper machine felt as defined in one of Claims 1 through 5, wherein the nonwoven layer(s) (7) containing the fiber combination has or have a weight per unit area of 50 to 150 g/m2.

7. A paper machine felt (11) having a textile thread system (13), wherein threads made of a material A that has a maximum water uptake of more than 10 wt% (saturation value, 23°C), and threads made of a material B that has a maximm water uptake of no more than 10 wt% (saturation value, 23°C), are provided in the thread system (13).

8. The paper machine felt as defined in Claim 7, wherein the thread system is part of or is made of a woven fabric (13), a knitted fabric, or a thread layer.

9. The paper machine felt as defined in Claim 8, wherein the woven fabric (13), knitted fabric, or thread layer is arranged in the paper-side nonwoven layer (12, 14).

10. The paper machine felt as defined in Claim 7 or 8, wherein the woven fabric (13), knitted fabric, or thread layer forms the support of the paper machine felt (11).

11. The paper machine felt as defined in one of Claims 1 or 10, wherein material A is polyamide-4 and/or polyamide-4,6 and/or is a polyamide that contains poly (vinylpyrrolidone) and/or polyetheramide.

12. The paper machine felt as defined in Claim 11, wherein the polyamide that contains poly (vinylpyrrolidone) and/or polyetheramide is a polyamide-6 or polyamide-6,6.

13. The paper machine felt as defined in Claim 11 or 12, wherein the poly (vinylpyrrolidone) is present at a proportion of 3 to 18 wt%.

14. The paper machine felt as defined in one of Claims 1 through 13, wherein material B is a polyamide material such as polyamide-6, polyamide-6,6, polyamide-6,10, polyamide-6,12, polyamide-11, polyamide-12, or poly (trimethylene terephthalate) or poly (butylene terephthalate).

## Revendications

1. Feutre pour machine à papier (1, 11) comportant au moins une couche non tissée (7) en fibres synthétiques, **caractérisé en ce qu'**existe dans la couche non tissée ou dans au moins une des couches non tissées (7) une combinaison de fibres, dans laquelle une partie des fibres synthétiques se compose d'un matériau A qui possède une absorption maximale d'eau supérieure à 10% en masse (valeur de saturation, 23 °C), et dans laquelle la fraction principale des fibres synthétiques se compose d'un matériau B qui possède une absorption maximale d'eau au plus égale à 10 % en masse (valeur de saturation, 23 °C).

2. Feutre pour machine à papier selon la revendication 1, **caractérisé en ce que** le matériau A existe dans la couche non tissée concernée (7) selon une fraction en masse comprise entre 3 et 25 % en masse.

3. Feutre pour machine à papier selon la revendication 1 ou 2, **caractérisé en ce que** la combinaison de fibres se présente dans une couche non tissée (7) proche du côté papier.

4. Feutre pour machine à papier selon l'une des revendications 1 à 3, **caractérisé en ce que** la combinaison de fibres se présente dans une couche non tissée disposée à l'intérieur du feutre pour machine à papier.

5. Feutre pour machine à papier selon l'une des revendications 1 à 4, **caractérisé en ce que** toutes les couches non tissées contiennent ou se composent de la combinaison de fibres au-dessus et/ou en-dessous d'un support.

6. Feutre pour machine à papier selon l'une des revendications 1 à 5, **caractérisé en ce que** la ou les couche(s) (7) contenant la combinaison de fibres possède(nt) un grammage compris entre 50 et 150 g/m².

7. Feutre pour machine à papier (11) présentant un système de fils textiles (13), **caractérisé en ce que** dans le système de fils (13) sont prévus des fils composés d'un matériau A qui possède une absorption maximale d'eau supérieure à 10 % en masse (valeur de saturation, 23 °C), et des fils qui se composent d'un matériau B qui possède une absorption maximale d'eau au plus égale à 10 % en masse (valeur de saturation, 23 °C).

8. Feutre pour machine à papier selon la revendication 7, **caractérisé en ce que** le système de fils est une partie d'un tissu (13), d'un tricot ou d'un assemblage à fils, ou s'en compose.

9. Feutre pour machine à papier selon la revendication 8, **caractérisé en ce que** le tissu (13), le tricot ou l'assemblage à fils est disposé dans la couche non tissée (12, 14) côté papier.

10. Feutre pour machine à papier selon la revendication 7 ou 8, **caractérisé en ce que** le tissu (13), le tricot ou l'assemblage à fils forme le support du feutre pour machine à papier (11).

11. Feutre pour machine à papier selon l'une des revendications 1 ou 10, **caractérisé en ce que** le matériau A est un polyamide 4 et/ou un polyamide 4.6, et/ou un polyamide qui contient de la polyvinylpyrrolidone et/ou un polyétheramide.

12. Feutre pour machine à papier selon la revendication 11, **caractérisé en ce que** le polyamide qui contient de la polyvinylpyrrolidone et/ou un polyétheramide est un polyamide 6 ou un polyamide 6.6.

13. Feutre pour machine à papier selon la revendication 11 ou 12, **caractérisé en ce que** la polyvinylpyrrolidone est présente selon une fraction comprise entre 3 et 18 % en masse.

14. Feutre pour machine à papier selon l'une des revendications 1 à 13, **caractérisé en ce que** le matériau B est un matériau de polyamide, comme le polyamide 6, le polyamide 6.6, le polyamide 6.10, le polyamide 6.12, le polyamide 11, le polyamide 12, le polytriméthylène-téréphtalate ou le polybutylène-téréphtalate.
